Europäisches Patentamt

European Patent Office

Office européen des brevets

(11) Veröffentlichungsnummer: **0 433 774 A1**

# EUROPÄISCHE PATENTANMELDUNG

(21) Anmeldenummer: 90123358.5

(22) Anmeldetag: 05.12.90

(51) Int. Cl.⁵: **A47L 9/24**, F16L 11/118,
F16L 11/127

Ein Antrag gemäss Regel 88 EPÜ auf Hinzufügung einer Seite der Beschreibung liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität: 18.12.89 DE 3941767

(43) Veröffentlichungstag der Anmeldung:
26.06.91 Patentblatt 91/26

(84) Benannte Vertragsstaaten:
DE DK ES FR GB IT NL SE

(71) Anmelder: **Progress Elektrogeräte GmbH
Lauterstrasse 8 Postfach 1869
W-7440 Nürtingen 10(DE)**

(72) Erfinder: **Jacob, Gernot
Stahlbühlstrasse 35
W-7251 Weissach(DE)**

(74) Vertreter: **Herrmann-Trentepohl, Werner,
Dipl.-Ing. et al
Kirschner, Grosse, Bockhorni Forstenrieder
Allee 59
W-8000 München 71(DE)**

(54) Vorrichtung zur Halterung einer elektrischen Leitung an einem Staubsaugerrohr und/oder -schlauch.

(57) Es ist eine Haltevorrichtung für eine entlang einem Staubsaugerrohr und/oder -schlauch entlangzuführende elektrische Leitung vorgesehen.

Die einzelnen Halteelemente 12, 13, 14, 15 sind spiralförmig ausgebildet und umgreifen das Rohr 2 bzw. den Schlauch 4 um wenigsten 360°. Die Lagerung der Halteelemente 12, 13, 14, 15 ist auf dem Rohr 2 bzw. Schlauch 4 schwimmend, so daß sich die Halteelemente 12, 13, 14, 15 in axialer bzw. radialer Richtung auf dem Rohr 2 bzw. Schlauch 4 frei bewegen können und die an ihnen mittels Klemmösen 16, 21, 22 festgeklemmte elektrische Leitung 5 sich selbst orientierend ausrichtet. Dadurch werden Dreh-, Biege- und Dehnbewegungen von Teleskoprohr und Schlauch 2 ermöglicht, so daß der Einsatz des Staubsaugers mit einem Teleskoprohr sowie die Flexibilität des Schlauches 4 nicht beeinträchtigt werden. Die elektrische Leitung 5 wird am Rohr 2 bzw. Schlauch 4 in jeder Arbeitsstellung eng anliegend geführt.

Fig.1

EP 0 433 774 A1

# VORRICHTUNG ZUR HALTERUNG EINER ELEKTRISCHEN LEITUNG AN EINEM STAUBSAUGERROHR UND/ODER -SCHLAUB

Die Erfindung betrifft eine Vorrichtung zur Halterung einer an einem Staubsaugerrohr und/oder -schlauch entlangzuführenden elektrischen Leitung mit auf das Rohr bzw. den Schlauch aufklipsbaren Halteelementen.

Eine Vorrichtung der vorbeschriebenen Art ist beispielsweise durch die Gebrauchsmuster 75 36 678 und 78 13 144 bekanntgeworden.

Bei diesen Vorrichtungen wird die elektrische Leitung am Saugrohr bzw. dem Schlauch eines Staubsaugers mit Hilfe von auf das Saugrohr oder den Schlauch aufgeklipsten Halteelementen geführt, wobei die Halteelemente federnd verbundene, das Saugrohr bzw. den Saugschlauch umgreifende Schenkel aufweisen, so daß die an der Verbindungsstelle aufgenommene Leitung auf dem Saugrohr bzw. Saugschlauch festgeklemmt wird.

Die bekannten Vorrichtungen weisen folgende Nachteile auf:
Da der Saugschlauch längendehnbar ist, das Elektrokabel jedoch nicht, müssen zwischen den einzelnen Halteklammern Leitungsschlaufen vorgesehen werden. Dadurch wird vermieden, daß bei Schlauchdehnungen, die auftreten, wenn der Staubsauger mit dem Schlauch gezogen wird, die Zugkräfte in die elektrische Leitung eingeleitet werden. Die Überlänge der Leitung führt allerdings dazu, daß sie unordentlich am Schlauch herabhängt und nicht unmittelbar entlang dem Schlauch geführt werden kann. Es besteht deshalb die Gefahr, daß man beim Saugen mit den Leitungsschlaufen an Möbeln hängenbleibt, so daß dann wieder die unerwünschten Zugkräfte in die elektrische Leitung eingeleitet werden. Auch können die Klipse vom Schlauch oder Rohr abgerissen werden. Da in der Regel die Klipse ferner von den Kunden selbst am Rohr bzw. am Schlauch anzubringen sind, ist keine fachgerechte optimale Anbringung zu erwarten, und im schlimmsten Falle werden ungünstige Abstände zwischen den Führungen eingehalten bzw. Leitungsführungen ganz weggelassen. Bei unsachgemäßer Anbringung der Halteelemente kann es vorkommen, daß die Flexibilität des Schlauches eingeschränkt wird. Schließlich ist nicht gewährleistet, daß die elektrischen Steckkontakte in ihrer ordnungsgemäßen Position verbleiben, so daß die Funktion z.B. einer elektrischen Bodendüse beeinträchtigt wird.

Es sind auch Vorschläge bekannt, die elektrische Leitung in den Schlauch zu integrieren. Diese Lösung ist jedoch technisch aufwendig und daher kostenintensiv. Ferner besitzt ein derart ausgebildeter Schlauch ein erhebliches Gewicht.

Der Erfindung liegt daher die Aufgabe zugrunde, die bekannte Haltevorrichtung zu verbessern, derart, daß ein sicherer Halt der elektrischen Leitung unmittelbar am Rohr bzw. Schlauch gewährleistet ist, ohne daß das optische Bild und die Funktion der elektrischen Verbindung, selbst bei Biege-, Dreh- und Dehnbewegungen von Rohr bzw. Schlauch beeinträchtigt werden. Die Haltevorrichtung soll darüber hinaus kostengünstig sein und ein geringes Gewicht aufweisen.

Diese Aufgabe wird dadurch gelöst, daß die elektrische Leitung auf dem Rohr bzw. dem Schlauch schwimmend gelagert ist.

Als vorteilhaft wird dabei angesehen, wenn die Halteelemente auf dem Rohr und/oder Schlauch schwimmend gelagert und im Abstand zueinander gehalten sind. Durch die schwimmende Lagerung in radialer und axialer Richtung eines jeden Halteelementes ist gewährleistet, daß sich die Vorrichtung bei jeder Biegebewegung bzw. Drehbewegung selbst orientierend ausrichten kann, so daß es nicht vorkommt, daß sich die elektrische Leitung um das Rohr bzw. den Schlauch herumwickelt, wenn sich diese Teile infolge einer kreisförmigen Saugbewegung um den Staubsauger herum in der einen oder anderen Richtung drehen. Die Dehnbewegung kann dadurch aufgenommen werden, daß z.B. im Griffbereich eine sogenannte Zugentlastung für das Kabel vorgesehen ist oder daß diese Zugentlastung durch eine besondere Ausgestaltung jedes Halteelementes erzielt wird. Zu diesem Zweck sind die Halteelemente vorteilhaft als das Rohr bzw. den Schlauch umgreifende Spiralen ausgebildet, die diese Teile vorzugsweise um 360° umgreifen. Dabei sind die Spiralen im Querschnitt in etwa c-förmig ausgebildet, so daß die elektrische Leitung in den Spiralen, dem Spiralengang folgend, aufgenommen wird. Wird die elektrische Leitung nun infolge Schlauchdehnung auf Zug beansprucht, so ermöglicht jedes Halteelement eine Dehnung von ca. 60 mm. Die Spiralenenden besitzen vorteilhaft Klemmösen, in welchen die elektrische Leitung festgeklemmt ist, so daß die elektrische Leitung im Bereich eines jeden Halteelementes fixiert am Schlauch bzw. Rohr gehalten wird. Sollten größere Dehnungswege notwendig sein, wie beispielsweise im Bereich eines Teleskoprohres, dann können auch mehrere Spiralengänge hintereinander vorgesehen sein, in denen die elektrische Leitung aufgenommen wird. Die Spiralen können leicht auf das Rohr bzw. den Schlauch aufgeschoben werden und sind in ihrem Abstand zueinander dadurch fixiert, daß sie an dem elektrischen Kabel mittels Klemmung gehalten sind. Es ist allerdings auch denkbar, daß sich zwischen den einzelnen Halteelementen Distanzeinrichtungen befinden wie beispielsweise ein angespitztes Kunststoffband oder dergleichen. Hierdurch wird gewährleistet, daß die Halteelemente bei der Montage im richtigen Abstandzueinander angeordnet werden. Damit die Spiralengänge nach einer erfolgten Dehnung in ihre ursprüngliche Ausgangslage sofort zurückkehren, ist es vorteilhaft, wenn die beispielsweise aus Kunststoff hergestellten Spiralen durch Federstahlarmierungen verstärkt sind. Bei der Ausführungsform eines Halteelementes mit mehreren Spiralgängen, wie es bei einem Teleskoprohr eingesetzt wird, kann eine dehnbare Manschette vorgesehen sein, welche die Spiralen umschließt.

Es ist in weiterer vorteilhafter Ausgestaltung vorgesehen, daß das an dem bodendüsenseitigen Schlauchende vorgesehene Halteelement eine integrierte Steckdose aufweist, in welche der Stecker der zur elektrischen Bodendüse führenden elektrischen Leitung einsteckbar ist. Um zu vermeiden, daß dieses Halteelement vom Schlauch bzw. Rohr abgezogen wird, kann es klemmbar ausgebildet sein oder es kann ein klemmbarer Anschlag vorgesehen sein, an welchem das Halteelement frei drehbar in axialer Richtung jedoch am Schlauch bzw. Rohr gehalten wird. Die Steckdose kann jedoch auch in einem eigenen Klemmhalter vorgesehen sein, der auf dem Schlauch- oder Rohrende festgeklemmt wird. Bei einer Trennung der beiden Teile wird der Klemmhalter an dem Schlauchende befestigt, so daß das lose Kabelende an dem nicht benutzten Rohr verbleibt und nicht stört.

Die Funktionen des Staubsaugers, wie Ein- und Ausschalten sowie Regelung der Saugleistung, können auch vom Bereich des Saugrohrs aus beeinflußt werden. Hierzu weist das elektrische Kabel außer der zur Stromversorgung der Bodendüse erforderlichen Anzahl von Adern weitere Adern für Schalt- bzw. Steuerfunktionen auf, und auf dem Rohr, gegebenenfalls mit dem Halteelement integriert, sind Bedienungselemente wie z.B. Schalter vorgesehen. Auf diese Weise läßt sich ein zusätzlicher Bedienungskomfort erzielen.

Die erfindungsgemäßen Halteelemente haben einen Dehnungsbereich von jeweils ca. 60 bis 65 mm, so daß bei der Anordnung von 4 Halteelemten ca. 260 mm Dehnung aufgenommen werden kann, was allgemein bei gewellten Staubsaugerschläuchen nicht erreicht wird. Da das Kabel in den spiralförmigen Halteelementen eingelegt ist, ergibt sich insgesamt eine saubere Lösung, bei welcher die elektrische Leitung eng am Schlauch bzw. Rohr anliegt, so daß der optische Gesamteindruck ausgezeichnet ist und die Gefahr vermieden wird, daß man mit der elektrischen Leitung an Möbeln hängenbleiben kann. Die als Führungen dienenden Halteelemente können bereits vormontiert dem Kunden mitgeliefert werden, so daß dieser sie in der richtigen Lage, Reihenfolge und im richtigen Abstand am Rohr bzw. Schlauch montieren kann. Das Anbringen ist denkbar einfach und erfolgt einfach durch zentrisches Aufschieben auf den Schlauch bzw. auf das Rohr. Die elektrische Leitung orientiert sich selbst in der richtigen Richtung am Rohr bzw. Schlauch und nimmt auch einen richtigen Spannungszustand ein, der durch die Kabellänge zwischen dem Staubsauger und der Bodendüse vorgegeben ist. Das am Rohr bzw. Schlauch schwimmend fixierte Kabel behindert in keiner Weise die Flexibilität des Schlauches bzw. die Handhabung von Rohr und Schlauch, da die Biegungen, Dehnungen und Drehungen unbeeinträchtigt ausgeführt werden können. Der Übergang vom Schlauch zum Griff des Saugrohres kann direkt erfolgen, ohne daß eine Längenzugabe des Kabels erforderlich ist, da die Drehbarkeit des Griffs am Schlauch nicht mehr von der elektrischen Leitung behindert wird. Ein Hängenbleiben an Möbeln wird so gut wie ausgeschlossen, da die elektrische Leitung flexibel ist und so über die Möbelkante hinwegrutschen kann. Zu dem hohen Gebrauchswert der erfindungsgemäßen Gesamtlösung kommt der weitere Vorteil hinzu, daß die Vorrichtung kostengünstig gegenüber denjenigen Lösungen ist, bei welchen das Kabel in den Schlauch integriert ist. Gegenüber solchen Maßnahmen hat die vorgeschlagene Lösung auch Vorteile bzgl. des Gewichtes.

Damit verhindert wird, daß beim Abziehen des Schlauches und Lösen der elektrischen Kupplung die Ringe bei senkrecht gehaltenem Schlauch nach unten rutschen, kann in vorteilhafter Weise vorgesehen sein, daß im Bereich der Schlauchenden mit dem Schlauch festverbundene Halteelemente vorgesehen sind, an denen die angrenzenden Spiralen radial frei drehbar geführt sind. So können die Spiralen einen Haken besitzen, der z.B. einen Rand des am Schlauch fixierten Halteelements übergreift. Zusätzlich kann es vorteilhaft sein, die elektrische Leitung auch in der Mitte des Schlauches in Längsrichtung festzulegen. In dem Fall, daß der Schlauch in der Mitte zu einer Schlaufe nach oben gebogen wird, können dann die Halteelemente nicht auf beiden Seiten der Schlaufe nach unten rutschen, wobei die Schlaufe von der elektrischen Leitung überbrückt werden könnte. Bei einem Strecken des Schlauches könnten dann die Halteelemente evtl. nicht von selbst in die Ursprungslage zurückkehren.

Eine weitere alternative Ausführungsform der schwimmenden Lagerung der elektrischen Leitung kann dadurch gegeben sein, daß im Abstand zueinander Halteelemente auf dem Schlauch bzw. dem Staubsaugerrohr fixiert werden und diese Halteelemente z.B. an ihrem Umfang umlaufend gelagerte Satelliten tragen, in denen die elektrische Leitung geführt ist. Diese Satelliten ermöglichen wie bei dem ersten Ausführungsbeispiel eine Selbstorientierung der Leitung. Wenn die elektrische Leitung in den Satelliten in Längsrichtung des Schlauches bzw. Rohres verschiebbar geführt ist, dann kann eine am Schlauchende vorgesehene Leitungszugentlastung vorgesehen sein, mit welcher die elektrische Leitung von Zugkräften entlastet werden kann. Diese Zugkräfte treten - wie oben ausgeführt - auf, wenn sich der Schlauch dehnt bzw. das Teleskoprohr ausgeschoben wird. Es ist aber auch denkbar, daß die elektrische Leitung ähnlich wie bei den Spiralen mittels einer Schlaufe an einem Satelliten geführt wird. Zu diesem Zweck kann der Satellit eine Aufnahmeeinrichtung aufweisen, die sich in der Radialebene quer zum Schlauch bzw. Rohr erstrecken kann und welche sich elastisch in Richtung der Rohr- bzw. Schlauchlängsachse verdreht, wenn auf die elektrische Leitung eine Zugkraft ausgeübt wird. Da die Ringe mit der Elektrobodendüse als Zubehörteile geliefert werden und nachträglich auf dem Rohr bzw. Schlauch angebracht werden müssen, ist in vorteilhafter Weise vorgesehen, daß die ringförmigen Führungskörper geteilt ausgebildet sind und von den Kunden in vorgegebenen Abständen am Rohr bzw. Schlauch durch Steckverbindungen befestigt werden. Diese Steckverbindungen sind derart ausgebildet, daß für den umlaufenden Satelliten eine glatte Führungsbahn gebildet ist und der Satellit in seiner Umlaufbewegung nicht behindert wird. Der Satellit kann z.B. einen Gleitfuß aufweisen, der in eine c-förmige Rille des ringförmigen Führungskörpers vor dessen Zusammenfügen eingeführt wird. Es sind allerdings auch andere Führungseinrichtungen denkbar, bei denen ineinandergeführte Gleitringe vorgesehen sind, wobei die elektrische Leitung am Mantel des äußeren Gleitrings befestigt bzw. in Axialrichtung des Schlauches oder Rohres verschiebbar gehalten ist.

Wenn sich der Benutzer des Staubsaugers mit dem Schlauch und dem Rohr um das Staubsaugergehäuse herumbewegt, ohne daß sich letzteres mitdreht, dann führt der Schlauch gegenüber dem Gehäuse eine Umdrehung um seine Längsachse aus. Die elektrische Leitung kann dagegen dieser Drehbewegung nicht folgen, solange sie in einer Steckverbindung am Gehäuse endet. Im Falle mehrerer Umdrehungen kann es daher vorkommen, daß die elektrische Leitung den Schlauch in einer entsprechenden Zahl von Windungen umschlingt. Um auch dies zu vermeiden, kann die elektrische Leitung an wenigstens einem der beiden Schlauchenden, vorzugsweise an dem mit dem Staubsaugergehäuse zu verbindenden Ende, mit einem Rotationsausgleich versehen sein. Dieser besteht vorzugsweise aus einem Gehäuse mit zwei gegeneinander verdrehbaren Teilen und davon eingeschlossenen Schleifringkontakten. Das Gehäuse weist einen größeren Durchmesser auf als übliche Staubsaugerschläuche und ist daher nicht an einen vorgegebenen Schlauchdurchmesser gebunden. Der innere Gehäuseteil ist dabei vorteilhaft drehbar ausgebildet, während der äußere Gehäuseteil an einem Anschlußstutzen des Staubsaugergehäuses festgelegt wird. Dabei kann ein Adapter zur Anpassung an unterschiedliche Steckerkupplungen am Staubsaugergehäuse vorgesehen sein.

Das mit dem Staubsaugergehäuse zu verbindende Schlauchende wird vorteilhaft mittels einer Hülse in einem Anschlußstutzen des Staubsaugergehäuses gehalten, wobei mit Hilfe einer Nut-Nokkenverbindung eine drehbare, aber axial unverschiebbare Halterung erreicht wird.

Weitere Merkmale, Einzelheiten und Vorteile der Erfindung ergeben sich aus der nachfolgenden Beschreibung eines bevorzugten Ausführungsbeispiels anhand der Zeichnung. Darin zeigen:

Fig. 1: eine schematische Gesamtdarstellung von Bodendüse, Saugrohr, Schlauch und Bodenstaubsauger mit einer daran befestigten elektrischen Leitung;

Fig. 2: eine Seitenansicht des erfindungsgemäßen Halteelementes;

Fig. 3: eine Draufsicht auf das Halteelement gemäß Figur 2;

Fig. 4: eine Ansicht in axialer Rohrrichtung;

Fig. 5: eine perspektivische Ansicht eines Klemmelementes im Bereich des Schlauchendes;

Fig. 6: eine Ausführung des Halteelementes für ein Teleskoprohr, und

Fig. 7: eine Seitenansicht des Teleskoprohres in ausgezogenem Zustand, und

Fig. 8: eine schematische Darstellung des Saugschlauches mit einer in alternativer Weise daran gehaltenen elektrischen Leitung.

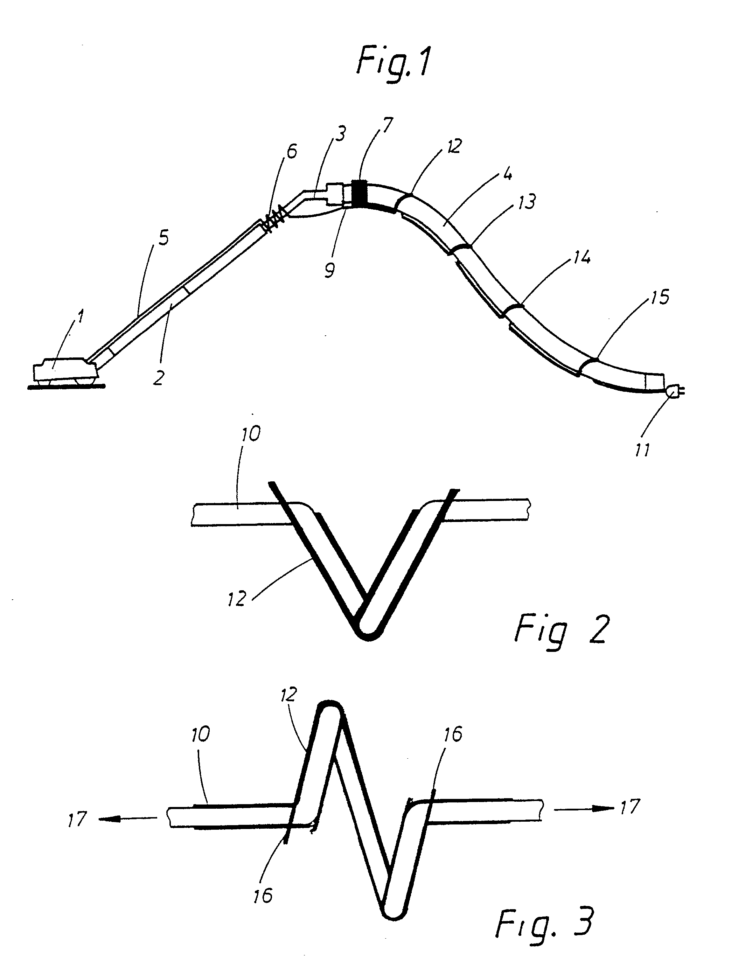

Das in der Fig. 1 dargestellte System weist eine Elektrobodendüse 1 und ein Saugrohr 2 mit einem Griffstück 3 auf, in welches der flexible Saugschlauch 4 eingesteckt ist. Der Bodenstaubsauger schließt sich am rechten Ende an den Saugschlauch 4 an und ist in der Zeichnung nicht dargestellt.

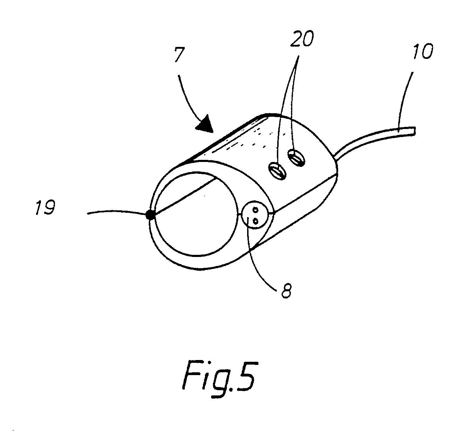

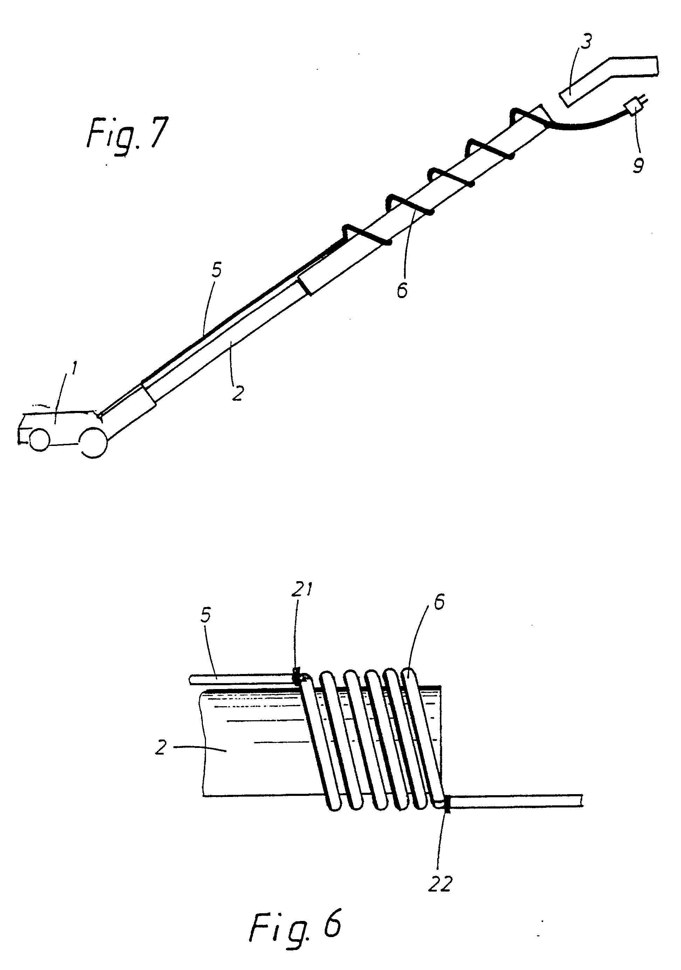

Eine elektrische Leitung 5 ist am Saugrohr 2 entlanggeführt bis zu einem spiralförmigen Halteelement 6, welches mehrere Spiralen aufweist und näher in der Fig. 6 dargestellt ist. Das am griffseitigen Ende des Schlauches 4 angeordnete Halteelement 7 kann wie in der Fig. 5 ausgebildet sein und eine integrierte Steckerkupplung 8 besitzen, in welche ein Stecker 9 von der elektrischen Leitung 5 der Elektrobodendüse 1 einsteckbar ist, um eine elektrische Verbindung zu der elektrischen Leitung 10 herzustellen. Die elektrische Leitung 10 besitzt ihrerseits an ihrem staubsaugerseitigen Ende einen Stecker 11, welcher in eine Steckerkupplung des nicht dargestellten Bodenstaubsaugers einsteckbar ist.

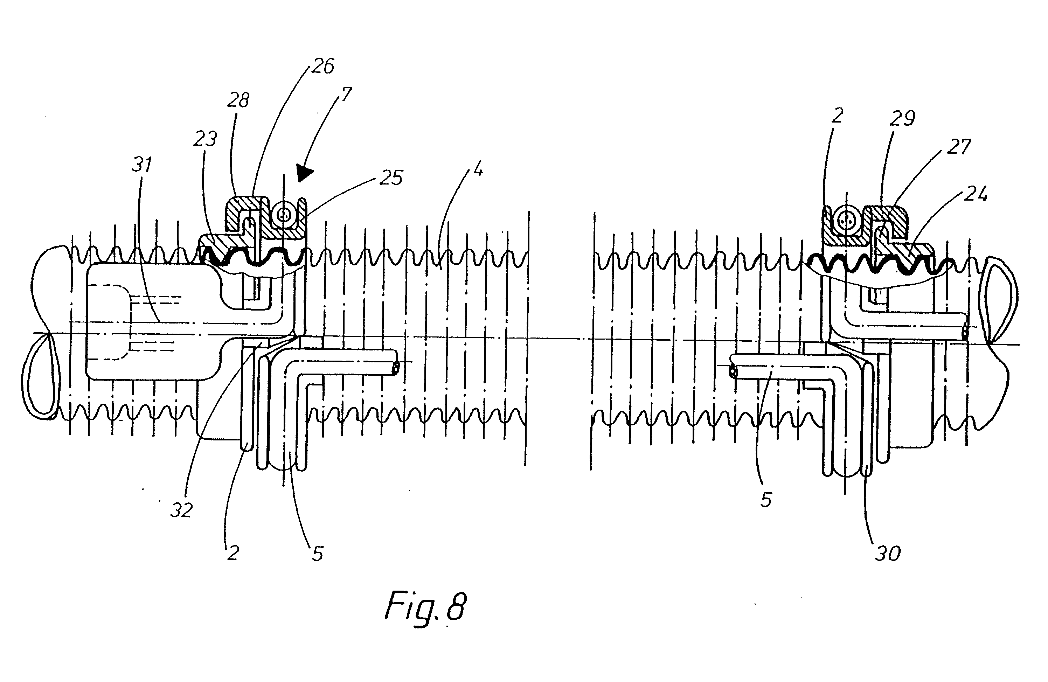

Es ist aber auch denkbar, daß das Halteelement, wie in der Fig. 8 dargestellt, ausgebildet ist. In dieser Fig. ist zu erkennen, daß an beiden Enden des Schlauches 4 jeweils ein Klemmring 23, 24 vorgesehen ist, der in an sich bekannter Weise auf dem Schlauch festgeklemmt ist. Diese Klemmringe besitzen kragenförmige Ränder 26, 27, die jeweils von einem Haken 28, 29 übergriffen werden, so daß die Spiralen 25 bzw. 30 in der Radialebene um den Schlauch frei drehbar sind und sich in der Axialrichtung des Schlauches dehnen können. Die festen Klemmringe 23 und 24 verhindern, daß sich die Ringe bei getrennter Kupplung 31 der elektrischen Leitung 5 zusammenschieben, wenn das Rohr bzw. der Schlauch in senkrechter Richtung angeordnet werden. Bei dem in der Fig. 8 gezeigten Ausführungsbeispiel ist für die Steckerkupplung 31 keine besondere Halterung vorgesehen, sondern diese wird mittels der anschließenden elektrischen Leitung in der Klemmöse 32 der Spirale 25 gehalten.

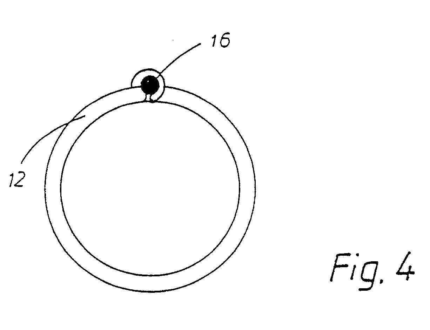

Auf dem Schlauch sind 4 Halteelemente 12, 13, 14, 15 schwimmend gelagert. D.h., daß sich diese Halteelemente sowohl in axialer als auch in radialer Richtung frei auf dem Schlauch 4 bewegen können. Der Abstand zwischen dem Halteelement 7 und den Halteelementen 12, 13, 14, 15 wird dadurch beibehalten, daß die elektrische Leitung 10 mit den Halteelementen fest verbunden ist. Aus den Fig. 2, 3 und 4 ist zu entnehmen, daß die Halteelemente 12, 13, 14 und 15 von Spiralen gebildet sind, die den Schlauch 4 um etwa 360° umgreifen. Die Spiralen sind in ihrem Querschnitt in etwa c-förmig ausgestaltet, so daß die elektrische Leitung 10 in den Spiralengang eingelegt werden kann und in diesem gehalten wird. An den Enden der Spiralen befinden sich Klemmösen 16, in welchen die elektrische Leitung 10 festgeklemmt wird. Wird nun eine Zugkraft in Richtung der Pfeile 17 auf die elektrische Leitung ausgeübt (siehe Fig. 3) dann dehnt sich das Halteelement 12 und gibt dieser Zugkraft nach. Es ist bei der dargestellten Ausführung eine Dehnung pro Halteelement von ca. 60 bis 65 mm möglich, so daß sich eine Gesamtdehnung von etwa 260 mm ergibt. Während der Dehnung löst sich die elektrische Leitung 10 nicht aus dem c-förmigen Profilquerschnitt der Spirale 12, so daß gewährleistet ist, daß die elektrische Leitung 10 bei jeder Bewegung des Saugschlauches 4 eng an diesen anliegt. Der Innendurchmesser 18 des Halteelementes ist etwas größer als der Außendurchmesser des Schlauches, so daß das Haltelement 12 schwimmend, d.h. in radialer und axialer Richtung beweglich auf dem Schlauch 4 gelagert ist.

Das Halteelement 7 ist zweiteilig ausgebildet, wobei die beiden Teile durch ein Filmscharnier 19 miteinander verbunden sind. Sie werden an der dem Filmscharnier gegenüberliegenden Seite durch 2 Schrauben 20 zusammengehalten. Das Halteelement 7 verhindert, daß bei gezogenem Stecker 11 und gelöstem Griff 3 die Halteelemente 12, 13, 14, 15 von dem Schlauch 4 herunterrutschen können.

Wie aus den Fig. 6 und 7 erkennbar ist, weist das Halteelement 6 mehrere Spiralwindungen auf. Es ist daher in der Lage, eine größere Dehnung bis zu 400 mm zuzulassen, was beispielsweise bei ausgezogenem Teleskoprohr (siehe Fig. 7) notwendig ist. Im zusammengeschobenen Zustand gemäß Fig. 6 liegen die einzelnen Spiralgänge dicht nebeneinander, so daß das Halteelement 6 einen relativ kleinen Platz beansprucht. Es kann darüber hinaus vorgesehen sein, daß die einzelnen Spiralen des Halteelementes von einer dehnbaren Manschette oder dergleichen umgeben sind. Damit die einzelnen Spiralen des Halteelementes, das aus Kunststoff hergestellt sein kann, nach ihrer Dehnung möglichst schnell wieder in ihre ursprüngliche Lage zurückgehen, kann vorgesehen sein, daß die Spiralen durch Federstahlarmierungen verstärkt sind. Bei dem ausgeführten Ausführungsbeispiel betragen der Spiraldurchmesser ca. 50 mm und die Länge des Halteelementes 6 bei auf Block liegenden Spiralgängen ca. 50 mm. Die Montage ist denkbar einfach. Zunächst wird die elektrische Leitung 5 in die Klemmöse 21 eingeklemmt und dann in die c-förmigen Spiralgänge eingelegt, wobei es vorteilhaft ist, wenn der Querschnitt das Kabel mehr als 180° umgreift, so daß das Kabel sicher in den Spiralgängen gehalten wird. Dann wird die elektrische Leitung in die Klemmöse 22 eingeklemmt. Schließlich wird das ganze Paket, bestehend aus elektrischer Leitung und Spiralenblock auf das Rohr 2 aufgeschoben, und das Teleskoprohr wird dann in seine Arbeitsstellung ausgefahren, wobei sich das Halteelement 6 dehnt, wie in Fig. 7 dargestellt ist.

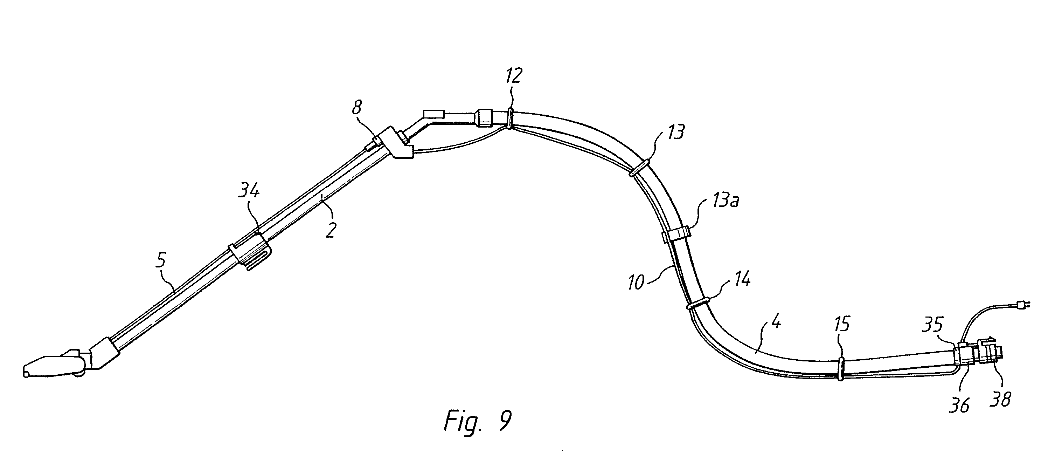

In der Ausführungsform nach Fig. 9 ist zwischen den Halteelementen 13 und 14 ein weiteres Halteelement 13a angeordnet, das im Gegensatz zu den übrigen Halteelementen 12 bis 15 nicht schwimmend gelagert, sondern in Längsrichtung des Schlauches festgelegt ist. Dies bewirkt eine zusätzliche Fixierung der elektrischen Leitung in der Mitte des Schlauchs. Wenn der Schlauch, z.B. bei Nichtbenutzung des Staubsaugers, so gebogen wird, daß eine verhältnismäßig enge Schlaufe entsteht, so können insbesondere bei nach oben weisender Schlaufe die zwei angrenzenden Halteelemente an den Schenkeln der Schlaufe verrutschen, wobei der offene Bereich der Schlaufe dann von der elektrischen Leitung überbrückt wird. Bei einem Strecken des Schlauchs könnten dann die Halteelemente u.U. nicht mehr von selbst in die ursprüngliche Position zurückkehren. Dieser unerwünschte Effekt wird durch die mittige Fixierung der elektrischen Leitung an dem Halteelement 13a sicher vermieden.

Die Steckerkupplung 8 kann auch unabhängig von dem Halteelement an einem eigenen Klemmhalter angeordnet sein, wie es in Fig. 9 dargestellt ist. Der Klemmhalter ist in diesem Fall auf das Rohr 2 aufgesetzt. Bei einer Trennung von Rohr und Schlauch, wenn beispielsweise eine Handdüse allein mit dem Schlauch verwendet werden soll, wird der Stecker aus der Dose gezogen und der Klemmhalter auf das Endstück des Schlauchs 4 gesetzt. Am Schlauch ist damit kein freihängendes Leitungsende vorhanden. Natürlich kann der Klemmhalter mit der Steckdose auch von vornherein am Schlauchende aufgeklemmt sein, wobei das am Rohr befindliche Leitungsstück etwas länger ausgeführt sein müßte.

Fig. 9 zeigt als weitere Ausführungsvariante einen Schalter oder ähnliches Bedienungselement 34 am Staubsaugerrohr. Wenn die elektrische Leitung die notwendige Anzahl von Adern aufweist, können verschiedene Bedienungsfunktionen, wie Ein- und Ausschalten oder Regulieren der Saugkraft, am Saugrohr vorgenommen werden. Die Bedienungselemente können auch an anderer Stelle, z.B. in Verbindung mit dem Klemmhalter, vorgesehen werden.

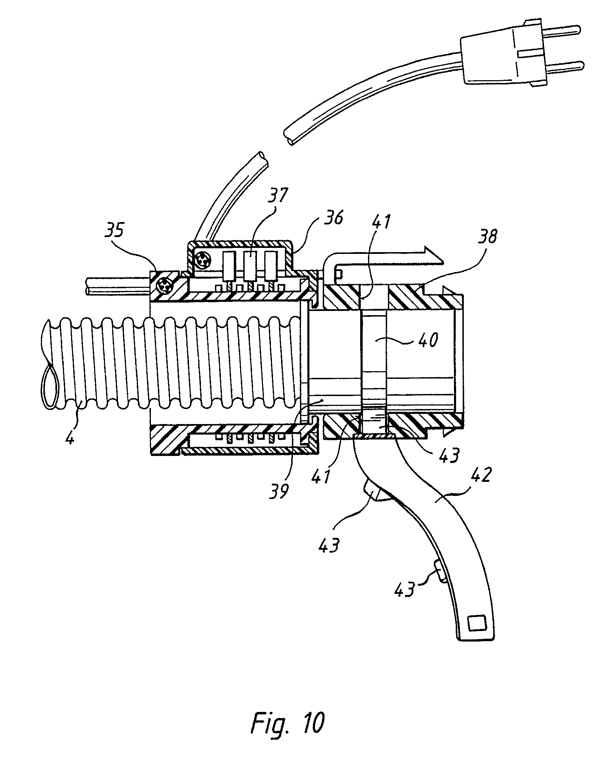

Schließlich ist gem. Fig. 9 und 10 noch eine Anordnung vorgesehen, die ein Verwinden der elektrischen Leitung auf dem Schlauch auch dann verhindert, wenn sich die Bedienungsperson mit dem Saugrohr ein- oder mehrmals um den Staubsauger herumbewegen sollte, ohne daß das Staubsaugergehäuse dieser Bewegung folgt. Hierzu ist an dem mit dem Staubsaugergehäuse verbundenenSchlauchende ein Rotationsausgleich in Form eines hülsenförmigen Gehäuses vorgesehen, das aus einem drehbaren Innenteil 35 und einem festgelegten Außenteil 36 besteht. Zwischen den beiden Gehäuseteilen sind Schleifringkontakte 37 vorgesehen. Das Staubsaugergehäuse weist in diesem Fall einen Anschlußstutzen 38 auf, in den das Schlauchende mit einer Hülse 39 eingeschoben wird. Die Hülse ist mit einer Umfangsnut 40 und der Anschlußstutzen mit Öffnungen 41 versehen, und an den Anschlußstutzen ist ein Spannband 42 angespritzt, das auf seiner Innenseite Nocken 43 trägt. Bei eingeschobener Hülse 39 wird das Spannband 42 so um den Anschlußstutzen 38 gelegt, daß die Nocken 43 durch die Öffnungen 41 in die Nut 40 eingreifen. Der Schlauch wird damit in Längsrichtung gehalten, kann sich aber noch frei drehen. Der äußere Gehäuseteil 36 ist, wie angedeutet, mit Hilfe einer Fixiernase an dem Anschlußstutzen 38 so festgelegt, daß er sich weder drehen noch in Längsrichtung lösen kann.

Der Innendurchmesser des hülsenförmigen Gehäuses ist größer als der Außendurchmesser üblicher Staubsaugerschläuche. Das Gehäuse kann daher ebenso wie die Halteelemente auch nachträglich auf unterschiedliche Schläuche aufgeschoben werden. Zur Anpassung an verschiedene Steckerkupplungen kann das Gehäuse eine Adapteranordnung aufweisen, wodurch die nachträgliche Ausrüstung eines Staubsaugers mit der erfindungsgemäßen Vorrichtung weiter erleichtert wird.

**Ansprüche**

1. Vorrichtung zur Halterung einer an einem Staubsaugerrohr und/oder -schlauch entlang zu führenden elektrischen Leitung mit auf das Rohr bzw. den Schlauch aufklipsbaren Halteelementen, **dadurch gekennzeichnet**, daß die elektrische Leitung (10) auf dem Rohr (2) bzw. dem Schlauch (4) schwimmend gelagert ist.

2. Vorrichtung nach Anspruch 1, **dadurch gekennzeichnet**, daß die elektrische Leitung (10) an den Halteelementen (12, 13, 14, 15) befestigt ist und die Halteelemente auf dem Rohr (2) bzw. Schlauch (4) schwimmend gelagert und im Abstand zueinander gehalten sind.

3. Vorrichtung nach Anspruch 1 oder 2, **dadurch gekennzeichnet**, daß die Halteelemente (12, 13, 14, 15) auf dem Rohr (2) bzw. Schlauch (4) in radialer und axialer Richtung schwimmend gelagert und im Abstand zueinander durch ihre Fixierung an der elektrischen Leitung (10) gehalten sind.

4. Vorrichtung nach wenigstens einem der vorhergehenden Ansprüche, **dadurch gekennzeichnet**, daß die Halteelemente im Abstand zueinander durch zwischen ihnen angeordnete Distanzstücke gehalten sind.

5. Vorrichtung nach wenigstens einem der vorhergehenden Ansprüche, **dadurch gekennzeichnet**, daß jedes Halteelement (6, 12, 13, 14, 15) von einer das Rohr (2) bzw. den Schlauch (4) vorzugsweise um 360° umgreifenden Spirale gebildet ist.

6. Vorrichtung nach Anspruch 5, **dadurch gekennzeichnet**, daß die elektrische Leitung (5, 10) dem Spiralengang folgend an der Spirale befestigt ist.

7. Vorrichtung nach wenigstens einem der vorhergehenden Ansprüche, **dadurch gekennzeichnet**, daß die Spirale (6, 12, 13, 14, 15) im Querschnitt im wesentlichen c-förmig ausgebildet ist und daß die elektrische Leitung (5, 10) in der Spirale aufgenommen wird.

8. Vorrichtung nach wenigstens einem der vorhergehenden Ansprüche, **dadurch gekennzeichnet**, daß die Spiralenenden als Klemmösen (16, 21, 22) ausgebildet sind, in denen die elektrische Leitung (5, 10) festgeklemmt ist.

9. Vorrichtung nach wenigstens einem der vorhergehenden Ansprüche, **dadurch gekennzeichnet**, daß das an dem bodendüsenseitigen Schlauchende vorgesehene Halteelement (7) eine integrierte Steckdose (9) aufweist.

10. Vorrichtung nach wenigstens einem der vorhergehenden Ansprüche, **dadurch gekennzeichnet**, daß die spiralförmigen Halteelemente aus Kunststoff hergestellt sind.

11. Vorrichtung nach Anspruch 9, **dadurch gekennzeichnet**, daß jede Spirale eine Federstahlarmierung aufweist.

12. Vorrichtung nach wenigstens einem der vorhergehenden Ansprüche, **dadurch gekennzeichnet**, daß die wenigstens mehrere Windungen aufweisende Spirale (6) von einer Manschette umschlossen ist.

13. Vorrichtung nach wenigstens einem der vorhergehenden Ansprüche, **dadurch gekennzeichnet**, daß am freien Rohr- bzw. Schlauchende ein vorzugsweise in Form eines klemmbaren Haltelementes (7) ausgebildeter Anschlag vorgesehen ist.

14. Vorrichtung nach wenigstens einem der vorhergehenden Ansprüche, **dadurch gekennzeichnet**, daß im Bereich der Schlauchenden mit dem Schlauch fest verbundene Halteelemente (23, 24) vorgesehen sind, an denen die angrenzenden Spiralen (25, 26) radial frei drehbar geführt sind.

15. Vorrichtung nach Anspruch 14, **dadurch gekennzeichnet**, daß die Halteelemente (23, 24) einen kragenförmigen Rand (27) aufweisen, der von einem Haken (28) der Spirale übergriffen wird.

16. Vorrichtung nach Anspruch 1, wobei die Halteelemente in axialer und radialer Richtung des Rohres bzw. des Schlauches festgelegt sind, **dadurch gekennzeichnet**, daß jedes Halteelemente von einem ringförmigen Führungskörper gebildet ist, der wenigstens einen umlaufend gelagerten Sateliten trägt, und daß die elektrische Leitung am Sateliten in Axialrichtung des Rohres bzw. Schlauches verschiebbar gelagert ist.

17. Vorrichtung nach Anspruch 16, **dadurch gekennzeichnet**, daß die ringförmigen Führungkörper geteilt sind, wobei die Teile durch Rastverbindungen miteinander derart verbindbar sind, daß die Sateliten eine ungehinderte Umlaufbewegung durchführen können.

18. Vorrichtung nach wenigstens einem der vorhergehenden Ansprüche, **dadurch gekennzeichnet**, daß die Sateliten jeweils eine sich etwa in der Radialebene des Rohres bzw.Schlauches erstreckende Aufnahmeeinrichtung für die elektrische Leitung aufweisen, welche eine Dehnung der Leitung bei Einwirkung einer Zugkraft ermöglicht.

19. Vorrichtung nach Anspruch 18, **dadurch gekennzeichnet**, daß die Aufnahmeeinrichtung von einem länglichen Kabelschuh gebildet ist, der sich bei Einwirkung einer Zugkraftauf die elektrische Leitung in Richtung der Längsachse des Rohres bzw. Schlauches elastisch verdreht.

20. Vorrichtung nach wenigstens einem der vorhergehenden Ansprüche, **dadurch gekennzeichnet**, daß die elektrische Leitung (10) etwa in der Längsmitte des Schlauches (4) in Längsrichtung festgelegt ist.

21. Vorrichtung nach Anspruch 20, **dadurch gekennzeichnet**, daß ein etwa in der Längsmitte des Schlauches (4) angeordnetes Halteelement (13a) in Längsrichtung unverschieblich festgelegt ist und die elektrische Leitung (10) in Längsrichtung unverschieblich hält.

22. Vorrichtung nach wenigstens einem der vorhergehenden Ansprüche, **dadurch gekennzeichnet**, daß im Bereich der Verbindung des Staubsaugerrohrs (2) mit dem Staubsaugerschlauch (4) in der elektrischen Leitung eine Stekkerkupplung (8) vorgesehen ist.

23. Vorrichtung nach den Ansprüchen 13 und 22, **dadurch gekennzeichnet**, daß die Steckerkupplung (8) in dem klemmbaren Halteelement (7) integriert ist.

24. Vorrichtung nach Anspruch 22, **dadurch gekennzeichnet**, daß die Steckerkupplung (8) in einem lösbaren Klemmhalter am Ende des Staubsaugerrohres (2) angeordnet ist.

25. Vorrichtung nach Anspruch 22 oder 23, **dadurch gekennzeichet**, daß die Steckerkupplung (8) am Ende des Staubsaugerschlauches (4) angeordnet ist.

26. Vorrichtung nach wenigstens einem der vorhergehenden Ansprüche, **dadurch gekennzeichnet**, daß die elektrische Leitung (5, 10) außer der zur Stromversorgung einer Elektrobodendüse (1) oder dergleichen erforderlichen Anzahl von Adern zusätzlich wenigstens eine weitere Ader zum Übertragen von Steuersignalen aufweist, und daß in der elektrischen Leitung, vorzugsweise in dem am Staubsaugerrohr (2) angeordneten Bereich (5), ein elektrischer Schalter (34) vorgesehen ist.

27. Vorrichtung nach wenigstens einem der vorhergehenden Ansprüche, **dadurch gekennzeichnet**, daß die elektrische Leitung (10) an wenigstens einem der beiden Schlauchenden mit einem Rotationsausgleich versehen ist.

28. Vorrichtung nach Anspruch 27, **dadurch gekennzeichnet**, daß der Rotationsausgleich an dem mit dem Staubsaugergehäuse zu verbindenden Schlauchende vorgesehen ist.

29. Vorrichtung nach Anspruch 27 oder 28, **dadurch gekennzeichnet**, daß der Rotationsausgleich ein den Staubsaugerschlauch umschließendes hülsenförmiges Gehäuse aufweist, das aus zwei gegeneinander verdrehbaren Teilen (35, 36) mit davon eingeschlossenen Schleifringkontakten (37) besteht.

30. Vorrichtung nach Anspruch 29, **dadurch gekennzeichnet**, daß der Innendurchmesser des Gehäuses größer ist als der Außendurchmesser des Schlauchs.

31. Vorrichtung nach einem der Ansprüche 28 bis 30, **dadurch gekennzeichnet**, daß der innere Gehäuseteil (35) gegenüber dem Schlauch (4) und dem Staubsaugergehäuse drehbar ist, und daß der äußere Gehäuseteil (36) an einem Anschlußstutzen (38) des Staubsaugergehäuses undrehbar und unverschiebbar festgelegt ist.

32. Vorrichtung nach wenigstens einem der Ansprüche 28 bis 31, **dadurch gekennzeichnet**, daß der Rotationsausgleich eine Adapteranordnung zur Anpassung an unterschiedliche Steckerkupplungen am Staubsaugergehäuse aufweist.

33. Vorrichtung nach wenigstens einem der vorhergehenden Ansprüche, **dadurch gekennzeichnet**, daß das mit dem Staubsaugergehäuse zu verbindende Schlauchende eine Hülse (39) aufweist, die in dem Anschlußstutzen (38) des Staubsaugergehäuses drehbar, aber axial unverschiebbar gehalten ist.

34. Vorrichtung nach Anspruch 33, **dadurch gekennzeichnet**, daß die Hülse (39) eine Umfangsnut (40) aufweist, daß in dem Anschlußstutzen (38) der Umfangsnut gegenüberliegend Öffnungen (41) ausgebildet sind, und daß ein um den Anschlußstutzen (38) zu legendes Spannband (42) mit Nocken (43) versehen ist, die durch die Öffnungen (41) in die Umfangsnut (40) ragen und damit die Hülse (39) in Axialrichtung festlegen.

35. Vorrichtung nach Anspruch 34, **dadurch gekennzeichnet**, daß das Spannband (42) an den Anschlußstutzen (38) angespritzt ist.

# Fig.1

# Fig 2

# Fig. 3

Fig. 4

Fig.5

Fig. 7

Fig. 6

Fig. 8

EP 0 433 774 A1

Fig. 9

Fig. 10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,A | DE-U-8 802 555   (SIEMENS AG)<br>* das ganze Dokument *<br>— — — | 1,5,2-4 | A 47<br>L 9/24<br>F 16 L 11/118 |
| Y | FR-A-2 260 739   (ELECTROLUX AB)<br>* das ganze Dokument *<br>— — — | 1,5 | F 16 L 11/127 |
| D,A | DE-U-7 813 144   (SIEMENS AG)<br>* das ganze Dokument *<br>— — — | 7,8,10 | |
| D,A | DU-A-7 536 678   (SIEMENS AG)<br>* das ganze Dokument *<br>— — — | 7,8,10,11 | |
| A | FR-A-2 041 737   (M. BONNET)<br>* Ansprüche ; Figuren *<br>— — — | 7,8,10 | |
| P,A | US-A-4 940 415   (WHIRPOOL CO)<br>* das ganze Dokument *<br>— — — | 13-17 | |
| A | DE-A-1 236 149   (DAYCO CO)<br>* das ganze Dokument *<br>— — — | 20-26 | |
| A | EP-A-0 307 735   (SIEMENS AG)<br>* das ganze Dokument *<br>— — — | 27-30 | RECHERCHIERTE SACHGEBIETE (Int. Cl.5) |
| A | FR-A-1 180 441   (HOLLAND-ELECTRO C.V)<br>* das ganze Dokument *<br>— — — | 33-35 | A 47 L<br>F 16<br>L |
| A | US-A-3 239 244   (K.E. LEINFELT)<br>* Spalte 1, Zeile 11 - Spalte 5, Zeile 32; Figuren *<br>— — — | 33-35 | |
| A | PATENT ABSTRACTS OF JAPAN vol. 2, no. 36 (6-7911)(M77) 10 März 1978,<br>& JP-A-52 149871 (HITACHI SEISAKUSHO K.K.) 13 Dezember 1977,<br>* das ganze Dokument *<br>— — — — — | 1-5 | |

Der vorliegende Recherchenbericht wurde für alle Patentansprüche erstellt

| Recherchenort | Abschlußdatum der Recherche | Prüfer |
|---|---|---|
| Den Haag | 19 März 91 | VANMOL M.A.J.G. |